Europäisches Patentamt

European Patent Office

Office européen des brevets

(11) Numéro de publication : **0 549 401 A1**

# (12) DEMANDE DE BREVET EUROPEEN

(21) Numéro de dépôt : **92403387.1**

(22) Date de dépôt : **14.12.92**

(51) Int. Cl.⁵ : **F16G 1/28**

(30) Priorité : **26.12.91 FR 9116289**

(43) Date de publication de la demande :
**30.06.93 Bulletin 93/26**

(84) Etats contractants désignés :
**AT BE CH DE DK ES FR GB GR IE IT LI LU MC NL PT SE**

(71) Demandeur : **CAOUTCHOUC MANUFACTURE ET PLASTIQUES**
**143 bis, rue Yves Le Coz**
**F-78000 Versailles (FR)**

(72) Inventeur : **Le Devehat, Christian**
**6, Boulevard Jérôme Trésaguet**
**F-58000 Nevers (FR)**

(54) **Courroie à denture, résistant à l'huile et à la chaleur par association d'élastomères.**

(57) Courroie flexible à denture dont le dos (5) et la denture sont formés d'un substrat (2) en composition élastomérique à matrice CSM ou ACSM et sont associés à une composition élastomérique à matrice HNBR qui recouvre la surface de la denture protégée par un tissu (3), traité HNBR, caractérisée en ce que l'interface de liaison entre les deux compositions élastomériques est décalé vers l'intérieur de la denture par l'interposition d'un élément modérateur intermédiaire (7) et/ou (9), en composition élastomérique HNBR éventuellement renforcée de fibres courtes, et en ce que l'armature flexible (1) de ladite courroie est noyée, dans la zone située entre deux dents consécutives au sein de la composition élastomérique HNBR, constituant de l'élément modérateur intermédiaire. En variante, une couche de liaison également renforcée (10) en composition élastomérique ACSM ou CSM peut être interposée entre l'élément modérateur intermédiaire et le substrat (2).

Application à la transmission de mouvement, ou de puissance, particulièrement sur véhicules.

FIG_2

EP 0 549 401 A1

L'invention est du domaine des courroies, c'est à dire des liens flexibles de transmission de mouvement ou de transmission de puissance, plus particulièrement celui des courroies à denture, dites synchrones, utilisées par exemple sur moteurs de véhicules où elles sont soumises aux risques de projections d'huile sous fortes températures.

Pour l'entraînement synchrone d'arbres à cames en tête des cylindres, le moteur du véhicule enferme, dans une enceinte peu aérée mais en principe bien sèche, une courroie synchrone à denture, soumise au rayonnement de chaleur issu des parois du carter.

De telles courroies sont composées d'une armature flexible associée à une denture en composition élastomérique, elle-même revêtue d'un tissu de protection, la face opposée étant constituée d'une composition élastomérique, de nature identique ou différente de celle de la denture, qui protège l'armature flexible et forme le dos desdites courroies. Celui-ci peut être lisse ou comporter des stries longitudinales pour entraînement par adhérence ou présenter une autre denture - identique ou différente - pour engrènement sur des poulies conjuguées.

Le problème de fluage en service, très longtemps source de déchéance, ayant été résolu par l'utilisation, en armature flexible, de fibres d'acier, de verre ou d'aramide, la durée de vie des courroies synchrones est devenue majoritairement une fonction directe de la résistance mécanique et thermique des mélanges à base d'élastomères entrant dans la composition de la denture et du dos des courroies.

Les mélanges à base de polychloroprène ont longtemps été considérés comme la solution la plus satisfaisante, en raison d'une combinaison de propriétés, telles que la tenue aux flexions répétées, la résistance à l'ozone et à l'huile et une tenue thermique jusqu'à 100°C. De tels mélanges s'avèrent, aujourd'hui, insuffisants devant la sévérité accrue des conditions d'utilisation et, particulièrement, l'augmentation des températures sous le capot.

Devant l'accroissement des exigences des constructeurs, les équipementiers de l'automobile ont fait porter leurs efforts sur la recherche de compositions élastomériques particulièrement performantes basées sur l'apparition de polymères nouveaux.

C'est ainsi que l'emploi de mélanges à matrice d'épichlorhydrine est proposé dans le document FR 2 334 021 de PIRELLI, l'utilisation de mélanges à matrice de copolymère éthylène-alpha-oléfine chlorosulfoné (CSM) faisant l'objet du document FR 2 628 678 de TOSOH CORP.

Il est cependant à remarquer que les courroies réalisées avec ces élastomères, si elles présentent une évolution positive de caractéristiques pour un fonctionnement à haute température, conservent une sensibilité aux huiles qui réduit leurs performances, en cas de contact accidentel.

Afin de pallier l'insuffisance de tenue aux huiles chaudes, tout en maintenant un niveau satisfaisant de durée de vie, il a été proposé d'utiliser des mélanges à matrice de copolymère butadiène-acrylonitrile hydrogéné (HNBR), nitrile hautement saturé.

Des courroies ainsi réalisées, de manière homogène, c'est à dire comportant la même composition élastomérique à matrice de copolymère butadiène-acrylonitrile hydrogéné (HNBR) sur le dos et dans la denture, sont décrites dans les documents WO 89/12076 de NIPPON ZEON et JP 01-269743 de BANDO CHEMICAL. Cependant, l'amélioration de la résistance aux huiles est obtenue à des conditions économiques peu avantageuses en raison du coût de l'élastomère de base.

Le document JP 64-588 311 de BANDO propose une amélioration de performances, sans surcoût exagéré, par association d'un substrat à matrice de copolymère éthylène-alpha-oléfine chlorosulfoné alkylé (ACSM), formant le dos et les dents de la courroie, à un tissu de revêtement de la denture imprégné d'une composition élastomérique à matrice de copolymère butadiène-acrylonitrile hydrogéné (HNBR).

Le problème majeur, pour lequel une solution y est proposée, réside dans l'adhérence du tissu revêtu de mélange à matrice de copolymère butadiène-acrylonitrile hydrogéné (HNBR) à la masse du substrat à matrice de copolymère éthylène-alphaoléfine chlorosulfoné alkylé (ACSM). En effet, sous sollicitations élevées, les points faibles demeurent les possibilités de cheminement d'humidité ou d'huile, par les flancs tranchés de la courroie et les coutures entre éléments du tissu de revêtement de la denture.

L'interface dudit tissu avec le mélange à matrice de copolymère éthylène-alpha-oléfine chlorosulfoné alkylé (ACSM) composant la denture contient, en particulier, le point le plus sollicité, plus spécialement par la flexion, au pied de ladite denture.

Des craquelures de la composition élastomérique amorçant la fin de vie de la courroie peuvent apparaître en ce point, qui est justement le plus mal protégé contre les imprégnations d'huile.

La présente invention a pour objectif de prolonger la durée de vie des courroies flexibles, particulièrement des courroies dites synchrones, dans une ambiance agressive à risque élevé de projection d'huile, l'essentiel restant le maintien de la tenue mécanique aux températures élevées.

Pour ce faire, l'invention consiste à associer une composition élastomérique à matrice de copolymère éthylènealpha-oléfine chlorosulfoné alkylé (ACSM) ou non alkylé (CSM), à une composition élastomérique à matrice de copolymère butadiène-acrylonitrile hydrogéné (HNBR), les deux compositions élastomériques présentant une bonne tenue mécanique à haute température. La composition élastomérique à matrice de copolymère butadiène-acrylonitrile hydrogéné (HNBR) assure, en outre, une protection contre l'agression par l'huile de moteur chaude au niveau des interfaces entre le tissu de revêtement de la denture et la composition élastomérique constituant le coeur des dents d'une part et entre le tissu de revêtement de la denture et le cablé constitutif de l'armature flexible de la courroie.

La composition élastomérique à matrice de copolymère butadiène - acrylonitrile hydrogéné (HNBR) est donc située en pied de denture, l'interface avec la composition élastomérique à matrice de copolymère éthylène - alpha - oléfine alkylé (ACSM) ou non alkylé (CSM) étant décalé vers l'intérieur de la denture.

L'invention est donc un perfectionnement aux courroies flexibles à denture, et plus particulièrement aux courroies dites synchrones, dans lesquelles le dos et la denture portée par l'une au moins des faces de la courroie sont formés d'un substrat à matrice de copolymère éthylène-alpha-oléfine chlorosulfoné alkylé (ACSM) ou non alkylé (CSM) et sont associés à une composition élastomérique à matrice de copolymère butadiène-acrylonitrile hydrogéné (HNBR) qui peut, éventuellement, être renforcée de fibres courtes et recouvre la surface de la denture protégée par un tissu traité par imprégnation d'une composition élastomérique à matrice de copolymère butadiène-acrylonitrile hydrogéné (HNBR).

L'invention est caractérisée en ce que l'interface de liaison entre, d'une part, la composition élastomérique à matrice de copolymère butadiène-acrylonitrile hydrogéné (HNBR), constituant le matériau d'imprégnation dudit tissu traité, et, d'autre part, la composition élastomérique à matrice de copolymère éthylène-alpha-oléfine chlorosulfoné alkylé (ACSM) ou non alkylé (CSM), formant le substrat du dos de la courroie et de la denture, est décalé vers l'intérieur de la denture, zone moins sollicitée en fonctionnement de la courroie flexible à denture, grâce à l'interposition d'un élément modérateur intermédiaire - coussin protecteur et/ou bouclier anisotropiquement renforcé - afin que la tenue mécanique aux températures élevées de ladite courroie flexible à denture ne soit pas altérée du fait des projections d'huile chaude venues du moteur, en ce que ledit élément modérateur intermédiaire est réalisé dans une composition élastomérique, éventuellement renforcée de fibres courtes, à matrice de copolymère butadiène-acrylonitrile hydrogéné (HNBR) de nature identique ou différente de la composition élastomérique d'imprégnation du tissu traité et en ce que le cablé constitutif de l'armature flexible de la courroie est noyé, dans la zone située entre deux dents consécutives de ladite denture, au sein de la composition élastomérique à matrice de copolymère butadièneacrylonitrile hydrogéné (HNBR), constituant de l'élément modérateur intermédiaire.

Dans une variante, une couche de liaison également renforcée, en composition élastomérique à matrice de copolymère éthylène-alpha-oléfine chlorosulfoné alkylé (ACSM) ou non alkylé (CSM), peut être interposée entre l'élément modérateur intermédiaire et le substrat également en composition élastomérique à matrice de copolymère éthylène-alpha-oléfine chlorosulfoné alkylé (ACSM) ou non alkylé (CSM).

L'invention sera mieux comprise à la lecture de la description accompagnant les dessins, dans lesquels :
- la figure 1 montre, en perspective, la structure classique d'une courroie flexible synchrone selon l'art antérieur, dans la partie rectiligne de sa trajectoire entre deux poulies ;
- la figure 2 illustre la disposition des composants de la structure d'une courroie flexible à denture, ici synchrone, perfectionnée selon l'invention, également dans la partie rectiligne de sa trajectoire ;
- la figure 3 représente deux variantes dudit perfectionnement, à bouclier anisotropiquement renforcé.

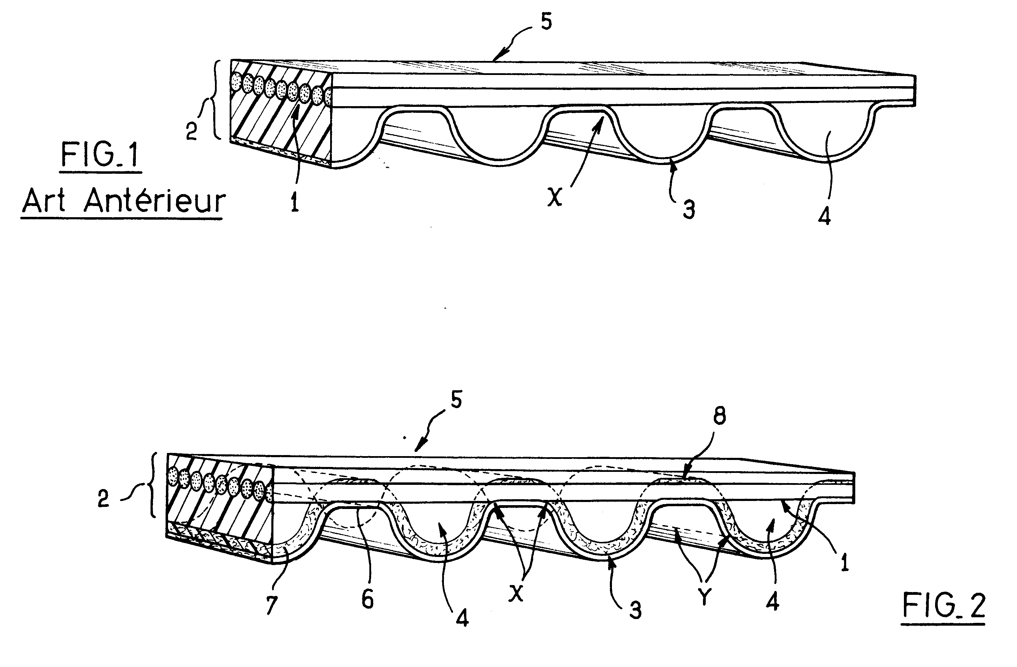

La figure 1 décrit, en vue perspective "transparente", dans la partie rectiligne de sa trajectoire, la structure devenue classique d'une courroie synchrone construite selon l'art antérieur. L'armature flexible (1) est formée d'une nappe de cablés ou retors, enroulés en hélice à spires jointives, lors de la confection.

Ladite armature flexible (1) est, le plus généralement, constituée de fibres de verre ou de polyamide aromatique traitées chimiquement pour assurer, lors de la vulcanisation, la liaison intime avec la composition élastomérique du substrat (2) dans lequel elle est noyée. La structure de la courroie flexible synchrone est complétée d'un tissu traité (3), venant recouvrir la surface de la denture. Ledit tissu traité (3) est, le plus souvent, un tissu croisé imprégné d'une dissolution de la composition élastomérique à laquelle il doit adhérer.

La composition élastomérique du substrat (2) constitue aussi bien le coeur des dents (4) que le dos de la courroie (5), formant la face externe de la courroie flexible synchrone. Le procédé de fabrication consiste en effet, au cours de l'opération de vulcanisation, à faire pénétrer, sous l'effet de la pression, ladite composition élastomérique, disposée sur le dos de l'enroulement constituant l'armature flexible (1), à travers celle-ci, de façon à remplir de sa masse le coeur des dents (4) et venir plaquer le tissu traité (3) contre le tambour de confection servant de moule interne qui donne sa forme à la denture de la courroie flexible synchrone. La température et la pression appliquées au cours de l'étape de vulcanisation assurent la liaison intime de ladite composition élastomérique du substrat (2) aussi bien avec ledit tissu traité (3) qu'avec les cablés de l'armature flexible (1) qui a été traversée au cours de cette opération. Les zones (X) sont, en fonctionnement, les plus sollicitées, par la fatigue mécanique au pied de la denture, car c'est au niveau de l'interface entre le tissu traité (3) et le cablé de l'armature flexible (1), interface situé entre deux pieds de dents consécutives, que doit être maintenu un niveau d'adhérence élevé qu'il est nécessaire de conserver même en cas de contact accidentel avec de l'huile de moteur chaude. Les flancs de la courroie flexible synchrone sont, en effet, tranchés selon les sections droites du manchon cylindrique, perpendiculairement à la denture, et constituent, de ce fait, une possibilité de cheminement préférentiel de l'huile, par effet mèche, le long de la partie apparente du cablé de l'armature flexible (1).

La figure 2 illustre, de manière semblable, dans la partie rectiligne de sa trajectoire, la disposition des composants de la structure d'une courroie flexible à denture, ici synchrone, perfectionnée selon l'invention. La composition élastomérique du substrat (2), à matrice de copolymère éthylène-alpha-oléfine chlorosulfoné alkylé (ACSM) ou non alkylé (CSM), matériau assurant la tenue mécanique aux températures élevées, constitue le dos de la courroie (5) et imprègne, pour une part, les cablés constitutifs de l'armature flexible (1).

Le tissu traité (3), qui enveloppe la forme extérieure de la denture de la courroie flexible synchrone aussi bien que la surface interne entre dents (6) est en contact intime exclusivement avec la composition élastomérique d'un élément modérateur intermédiaire, formé dans la présente variante, d'un coussin protecteur (7).

La composition élastomérique d'épaisseur sensiblement constante dudit coussin protecteur (7) comporte une matrice de copolymère butadiène-acrylonitrile hydrogéné (HNBR) homogène, c'est à dire dépourvue de renforcement par fibres courtes.

Le tissu traité (3) est lui-même imprégné d'une dissolution à base d'une composition élastomérique à matrice de copolymère butadiène-acrylonitrile hydrogéné (HNBR), de formulation identique ou différente.

Ledit coussin protecteur (7), interposé entre la composition élastomérique à matrice de copolymère éthylène-alpha-oléfine chlorosulfoné alkylé (ACSM) ou non alkylé (CSM) formant la denture et le tissu traité (3), sur toute sa longueur suivant le contour de ladite denture, leur est intimement lié. Sa présence provoque la création de zones d'enrobage partiel (8) de l'armature flexible (1), traversée localement par la composition élastomérique à matrice de copolymère butadièneacrylonitrile hydrogéné (HNBR) dudit coussin protecteur (7).

La partie la plus fragile de l'interface, dans les zones (X), où le tissu traité (3) vient approximativement tangenter l'armature flexible (1) est ainsi totalement noyée dans la composition élastomérique à matrice de copolymère butadièneacrylonitrile hydrogéné (HNBR) qui assure la meilleure protection contre les dégradations dues à l'huile et protège, de ce fait, la composition élastomérique à matrice de copolymère éthylène-alpha-oléfine chlorosulfoné alkylé (ACSM) ou non alkylé (CSM) de la denture.

Par conséquence, la frontière interface entre les deux compositions élastomériques est décalée par rapport au pied de la denture, d'une part dans le coeur des dents (4), majoritairement constitué de substrat (2) en composition élastomérique à matrice de copolymère éthylène-alpha-oléfine chlorosulfoné alkylé (ACSM) ou non alkylé (CSM), et d'autre part, dans l'épaisseur du dos de la courroie (5), par l'existence de la zone d'enrobage partiel (8) de l'armature flexible (1).

La composition élastomérique du substrat (2), à matrice de copolymère éthylène-alpha-oléfine chlorosulfoné alkylé (ACSM) ou non alkylé (CSM), assure la liaison physico-chimique avec l'armature flexible (1), hors des zones d'enrobage partiel (8), en continuité avec le coeur des dents (4).

Préférentiellement, l'épaisseur dudit coussin protecteur (7), sensiblement constante, est comprise entre 0,1 et 0,6 fois la hauteur des dents mesurée entre le tissu traité (3) et l'armature flexible (1).

Ainsi, non seulement ces zones d'interface, offrant, en cas de dégradation par l'huile de moteur chaude, une moindre résistance mécanique, sont-elles éloignées de la surface interne entre dents (6) aussi bien que de la surface externe du dos de la courroie (5), mais encore la surface de contact entre les deux compositions élastomériques, à matrice de copolymère butadiène-acrylonitrile hydrogéné (HNBR) et à matrice de copolymère éthylène-alpha-oléfine chlorosulfoné alkylé (ACSM) ou non alkylé (CSM), à leur interface, est-elle très nettement accrue par rapport à la longueur de la courroie flexible synchrone.

Par ailleurs, dans les zones de discontinuités (Y), où peut être ménagée une couture de raccordement entre éléments du tissu traité (3), les bords libres de ladite couture peuvent, grâce à l'existence du coussin protecteur (7) être profondément noyés dans la composition élastomérique à matrice de copolymère butadiène-acrylonitrile hydrogéné (HNBR) dudit coussin protecteur (7) et donc être, eux aussi, éloignés de l'interface entre les deux compositions élastomériques à matrice de copolymère butadièneacrylonitrile hydrogéné (HNBR) et à matrice de copolymère éthylène-alpha-oléfine chlorosulfoné alkylé (ACSM) ou non alkylé (CSM), repoussant tout risque de contact avec l'huile - qui aurait pu se produire par cheminement le long des bords cousus des éléments du tissu traité (3) - et donc d'affaiblissement des caractéristiques de la composition élastomérique du substrat (2) à matrice de copolymère éthylène-alpha-oléfine chlorosulfoné alkylé (ACSM) ou non alkylé (CSM).

La durée de vie en service des courroies flexibles à denture se trouve donc notablement accrue par ces quatre améliorations, à savoir, contact ininterrompu entre le tissu imprégné de composition élastomérique à matrice de copolymère butadiène-acrylonitrile hydrogéné (HNBR) et le coussin protecteur (7) constitué également d'une composition élastomérique à matrice de copolymère butadiène-acrylonitrile hydrogéné (HNBR), enrobage du cablé de l'armature flexible (1) dans les zones situées entre deux dents consécutives, suppression du contact entre la composition élastomérique du substrat (2), à matrice de copolymère éthylène - alpha -oléfine chlorosulfoné alkylé (ACSM) ou non alkylé (CSM), le cablé de l'armature flexible (1) et le tissu traité (3) au pied de la denture, et enfin, présence d'un environnement protecteur en composition élastomérique à matrice de copolymère butadiène-acrylonitrile hydrogéné (HNBR) dans les zones de couture du tissu traité (3).

Le présent perfectionnement est, ici, illustré sur un exemple de courroie flexible synchrone, mais il doit être entendu que le terme de denture peut également s'appliquer à des crans de courroies crantées ou à des stries longitudinales de courroies striées.

D'autre part, la figure illustre l'exemple d'une courroie flexible synchrone à dos lisse, mais il est évident que le présent perfectionnement s'applique à toute courroie flexible portant, sur l'une au moins de ses faces, une denture constituée de dents, crans ou stries longitudinales.

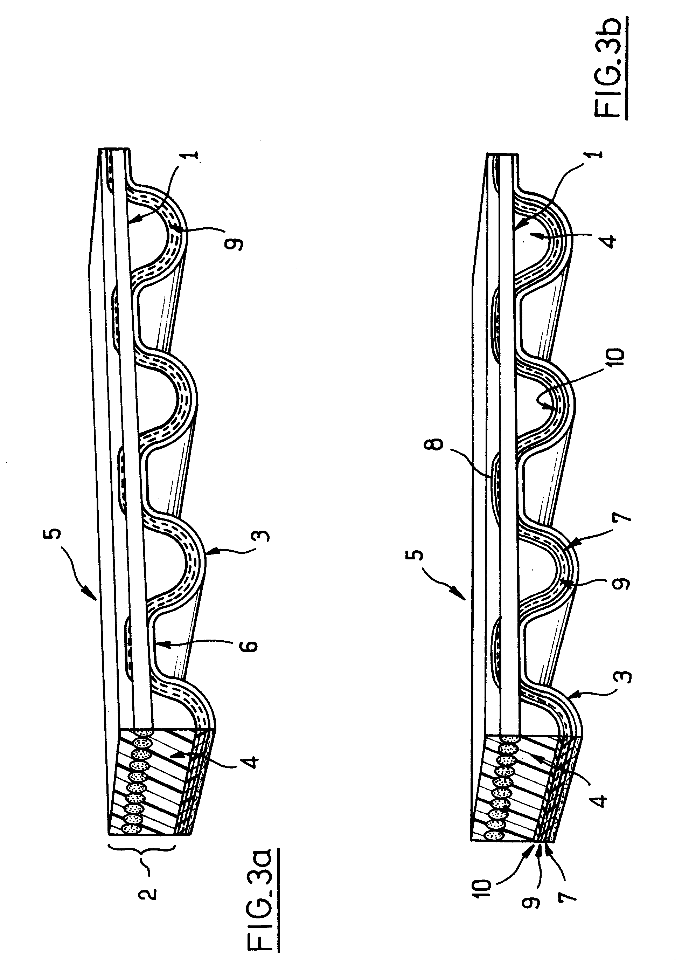

La figure 3 représente deux variantes de structure de courroie flexible permises par le perfectionnement objet de l'invention, où une anisotropie du module élastique des compositions élastomériques peut être assurée par incorporation de fibres courtes, le plus généralement textiles, présentant une orientation préférentielle.

Le procédé de fabrication d'une courroie flexible à denture, ici synchrone, perfectionnée, qui permet ledit renforcement anisotrope des compositions élastomériques, sera décrit en même temps que les composants de la courroie flexible synchrone illustrée par cette figure.

La nappe formant l'armature flexible (1) est confectionnée par enroulement hélicoïdal à spires sensiblement jointives, de cablés ou retors textiles, le plus généralement en fibres d'acier, de verre ou de polyamide aromatique. Au cours de la confection, est ensuite disposée une couche d'épaisseur constante de composition élastomérique à matrice de copolymère butadiène-acrylonitrile hydrogéné (HNBR), non vulcanisée, destinée à constituer l'élément modérateur intermédiaire.

Le contour de la denture est obtenu, au cours de la vulcanisation des compositions élastomériques, par plaquage, sous l'effet de la pression, du tissu traité (3) - ayant préalablement reçu le traitement d'imprégnation appropriécontre le profil interne d'un tambour de confection.

Dans la variante représentée en vue 3a, la couche de composition élastomérique à matrice de copolymère butadièneacrylonitrile hydrogéné (HNBR), destinée à former l'élément modérateur intermédiaire, peut, avantageusement, être renforcée de fibres courtes, de longueur comprise entre deux dixièmes de millimètre et vingt millimètres, préférentiellement constituées de fibres naturelles, telles que le coton ou des fibres cellulosiques, de fibres artificielles ou synthétiques telles que la rayonne, le polyamide ou le polyamide aromatique, le polyester, l'alcool polyvinylique ou des fibres acryliques. Afin de conférer à la composition élastomérique à matrice de copolymère butadiène-acrylonitrile hydrogéné (HNBR) un module d'élasticité compatible avec l'application, le taux pondéral de charge fibreuse sera limité à 30 parts pour 100 parts d'élastomère.

La composition élastomérique est disposée de manière à ce que l'orientation majoritaire des fibres courtes, provoquée par le calandrage, soit longitudinale, dans des plans sensiblement parallèles à ceux des cablés de l'armature flexible (1).

L'élément modérateur intermédiaire, ainsi constitué de la composition élastomérique à matrice de copolymère butadièneacrylonitrile hydrogéné (HNBR) renforcée de fibres courtes orientées, forme le bouclier anisotropiquement renforcé (9), disposé en lieu et place du coussin protecteur (7) de la variante précédente.

Préférentiellement, le bouclier anisotropiquement renforcé (9) présente une épaisseur comprise entre 0,1 et 0,6 fois la hauteur des dentures mesurée entre le tissu traité (3) et l'armature flexible (1).

Au cours de l'étape suivante de confection, cette première couche en composition élastomérique à matrice de copolymère butadiène-acrylonitrile hydrogéné (HNBR) est recouverte de la couche de composition élastomérique à matrice de copolymère éthylène-alpha-oléfine chlorosulfoné alkylé (ACSM) ou non alkylé (CSM), d'épaisseur nécessaire pour constituer le substrat (2) de la courroie à denture.

L'orientation privilégiée donnée aux fibres courtes de renforcement de la composition élastomérique à matrice de copolymère butadiène-acrylonitrile hydrogéné (HNBR) du bouclier anisotropiquement renforcé (9) de cette variante, ne s'oppose nullement à la traversée des cablés de l'armature flexible (1) qui restent dans des plans parallèles ; ladite orientation privilégiée n'est pas, non plus, sensiblement modifiée au cours de la traversée des cablés de ladite armature flexible (1). L'allongement, par rapport au périmètre initial, de l'interface entre les deux compositions élastomériques, à matrice de copolymère butadièneacrylonitrile hydrogéné (HNBR) et à matrice de copolymère éthylène-alpha-oléfine chlorosulfoné alkylé (ACSM) ou non alkylé (CSM), est une circonstance favorable au maintien de cette orientation préférentielle, par le cisaillement qu'il provoque dans la composition élastomérique renforcée de fibres courtes.

Après vulcanisation, les compositions élastiques renforcées présentent, donc, dans le sens de l'orientation majoritaire des fibres courtes, un module élastique élevé, alors que, dans les deux directions orthogonales, leur module élastique est sensiblement celui de la matrice élastomérique. Au cours du transfert, sous l'effet de la température abaissant la viscosité des compositions élastomériques et sous celui de la pression exercée sur le dos de la courroie (5), les deux compositions élastomériques vont, successivement, composer le bouclier anisotropiquement renforcé (9) et le coeur des dents (4), et plaquer le tissu traité (3) le long des formes imposées à la denture par le tambour de confection avant que ne soient, par vulcanisation, intimement liés entre eux les différents composants de la courroie flexible et donnée la forme définitive de ladite courroie flexible à denture.

Après vulcanisation, usinage du dos de la courroie et tranchage en courroies flexibles à dentures unitaires prêtes à livrer, tant les fibres courtes de renforcement que le tissu traité (3) se trouvent intimement imprégnés de la composition élastomérique à matrice de copolymère butadièneacrylonitrile hydrogéné (HNBR) qui les protège de toute contamination par projection d'huile.

Derrière cet écran protecteur, la composition élastomérique du substrat (2), à matrice de copolymère éthylène-alpha- oléfine chlorosulfoné alkylé (ACSM) ou non alkylé (CSM), plus sensible aux agressions chimiques, apporte la résistance mécanique à la denture et la liaison physico-chimique intime à l'armature flexible (1), car, sous des sollicitations sévères, ses propriétés mécaniques présentent un caractère de permanence, lors d'expositions prolongées à haute température.

La figure 3b propose une autre variante de courroie flexible, ici synchrone, améliorée selon l'invention, où l'élément modérateur intermédiaire associe un coussin protecteur (7) et un bouclier anisotropiquement renforcé (9), ou éventuellement une couche de liaison également renforcée (10).

La succession des compositions élastomériques appelées à traverser, lors de la fabrication, la nappe de cablés constituant l'armature flexible (1) peut être modulée, au moment de la confection, de façon à constituer une structure enfermant, entre la composition élastomérique à matrice de copolymère butadiène-acrylonitrile hydrogéné (HNBR)constituant le coussin protecteur (7) en contact avec le tissu traité (3) recouvrant la surface de la denture -, et la composition élastomérique à matrice de copolymère éthylène - alpha-oléfine chlorosulfoné alkylé (ACSM) ou non alkylé (CSM) - formant le coeur des dents (4) et le dos de la courroie (5) -, une ou deux compositions élastomériques renforcées de fibres courtes, l'une à matrice de copolymère butadièneacrylonitrile hydrogéné (HNBR), l'autre à matrice de copolymère éthylène-alpha-oléfine chlorosulfoné alkylé (ACSM) ou non alkylé (CSM).

De ce fait, la courroie flexible à denture peut, dans la structure la plus complète comporter, successivement, à partir du tissu traité (3) :

- un coussin protecteur (7), formé d'une couche mince en composition élastomérique à matrice de copolymère butadiène-acrylonitrile hydrogéné (HNBR), intimement lié par voie physico-chimique audit tissu traité (3) et de nature identique ou différente du matériau de son traitement d'imprégnation ;
- un bouclier anisotropiquement renforcé (9), réalisé en composition élastomérique de même nature que celle dudit coussin protecteur (7), c'est à dire à matrice de copolymère butadiène-acrylonitrile hydrogéné (HNBR), mais renforcée de fibres courtes ;
- une couche de liaison également renforcée (10), réalisée en une composition élastomérique à matrice de copolymère éthylène-alpha-oléfine chlorosulfoné alkylé (ACSM) ou non alkylé (CSM), c'est à dire de même nature que la composition élastomérique du substrat (2) qui lui fait suite, mais renforcée de fibres courtes de textiles artificiel ou synthétique et, préférentiellement, de polyamide, polyamide aromatique, polyester, alcool polyvinylique ou fibres acryliques dont le taux pondéral est au plus égal à 30 parties pour 100 parties d'élastomère.
- ladite composition élastomérique du substrat (2), à matrice de copolymère éthylène-alpha-oléfine chlorosulfoné alkylé (ACSM) ou non alkylé (CSM), non renforcée, constituant le coeur des dents (4) et le dos de la courroie (5).

Optionnellement, l'une des couches en composition élastomérique renforcée, c'est à dire soit le bouclier anisotropiquement renforcé (9) soit la couche de liaison également renforcée (10) peut être omise, lorsque les applications présentent un caractère de sévérité moins aigu. Chacune des couches de composition élastomérique est intimement liée, par voie physico-chimique, à la couche en composition élastomérique, de nature identique ou différente, au contact.

La superposition de ces différentes couches en composition élastomérique, dont le module élastique varie avec le taux pondéral de renforcement fibreux, permet d'établir, dans la structure de la courroie flexible synchrone, depuis le tissu traité (3) de revêtement de la surface des dents et jusqu'au dos de la courroie (5) un double gradient de modules d'élasticité permettant le passage progressif entre la couche résistant le mieux aux huiles, constituée par la composition élastomérique à matrice de copolymère butadiène-acrylonitrile hydrogéné (HNBR) du coussin protecteur (7), et le substrat (2), formant le coeur des dents (4) et le dos de la courroie (5), résistant le mieux à la fatigue mécanique à température élevée, puisque constitué d'une composition élastomérique à matrice de copolymère éthylène-alpha-oléfine chlorosulfoné alkylé (ACSM) ou non alkylé (CSM). De plus, la structure de la courroie flexible à denture ainsi constituée, permet, grâce à la localisation de l'interface entre compositions élastomériques de natures différentes - zone particulièrement fragile aux sollicitations élevées - au sein des compositions élastomériques renforcées de fibres courtes, de réduire la déformabilité de l'ensemble, donc les risques d'une amorce de défaut.

Préférentiellement, les compositions élastomériques renforcées de fibres courtes, composant le bouclier anisotropiquement renforcé (9) et la couche de liaison également renforcée (10) présentent des viscosités et des modules élastiques tels que, lors de la confection, l'armature flexible (1) se trouve, majoritairement, noyée au sein desdites compositions élastomériques renforcées.

L'épaisseur de chacune desdites couches en composition élastomérique renforcée de fibres courtes, ou la somme de leur épaisseur, est comprise entre 0,7 et 1,3 fois l'épaisseur de la nappe de cablés constitutifs de l'armature flexible (1).

Les compositions élastomériques à matrice de copolymère d'éthylène - alpha-oléfine alkylé (ACSM) ou non alkylé (CSM), qui constituent le dos de la courroie (5), le substrat (2) de la denture, et, éventuellement la couche de liaison également renforcée (10), comme les compositions élastomériques à matrice de copolymère butadiène acrylonitrile hydrogéné (HNBR) qui constituent l'élément modérateur intermédiaire - coussin protecteur (7) ou bouclier anisotropiquement renforcé (9) et qui sont également un composant du système d'imprégnation du tissu traité (3) - sont constituées, outre le polymère de base, d'agents de protection contre l'action de l'oxygène ou de l'ozone, d'agents de mise en oeuvre ou de plastifiants, d'agents de vulcanisation et d'une charge renforçante pulvérulente, noire ou claire. Elles peuvent, également comporter un matériau de renforcement fibreux, constitué de fibres courtes, c'est à dire de longueur comprise entre deux dixièmes de millimètre et vingt millimètres.

A titre d'exemples non limitatifs sont données ci-après les formulations types des compositions élastomériques, les limites de proportions pondérales étant indiquées pour cent parties du polymère de base.

| COMPOSANT | COMPOSITION ELASTOMERIQUE A MATRICE | |
|---|---|---|
| | HNBR | CSM ou ACSM |
| Polymère ...................... | 100 | 100 |
| Antioxydant/antiozonant ......... | 0-12 | 0-10 |
| Charge renforçante pulvérulente . | 0-100 | 0-100 |
| Agents de mise en oeuvre, et/ou plastifiants .............. | 2-40 | 2-40 |
| Agents vulcanisants ............. | 4-30 | 4-15 |
| Renforcement fibreux ........... | 0-30 | 0-30 |

Préférentiellement, la charge pulvérulente est constituée soit de noir de carbone soit de silice, les agents de mise en oeuvre ou les plastifiants sont le plus souvent des éthers ou des esters pour les trois types de compositions élastomériques.

Le système vulcanisant des compositions élastomériques, renforcées ou non de fibres courtes, à matrice de copolymère butadiène - acrylonitrile hydrogéné (HNBR) peut être de type à base de soufre - comprenant de l'oxyde de zinc, de l'acide stéarique et un accélérateur ou donneur de soufre -, de type mixte - à base de soufre et de peroxyde de zinc -, de type peroxydique - comportant un peroxyde organique et un coagent -, ou encore à base d'acrylate de zinc ou de ses dérivés, utilisé seul ou en coupage avec les types précédents.

Le système vulcanisant des compositions élastomériques, renforcées ou non de fibres courtes, à matrice de copolymère éthylène - alpha-oléfine alkylé (ACSM) ou non alkylé (CSM) peut être du type à base de soufre, à base de pentaérythritol, à base de bismaléimide, à base d'un peroxyde organique, ou tout autre système utilisé de manière classique pou la réticulation des compositions élastomériques à matrice de copolymère éthylène - alpha - oléfine (CSM).

Dans les compositions élastomériques à renforcement fibreux, les fibres courtes présentent préférentiellement une longueur comprise entre deux dixièmes de millimètre et vingt millimètres et sont le plus généralement constituées de fibres naturelles - coton ou fibres cellulosiques -, artificielles - telles que la rayonne - ou synthétiques à base de polyamide, de polyamide aromatique, de polyester, d'alcool polyvinylique ou de fibres acryliques.

Pour des raisons de mise en oeuvre des compositions élastomériques au cours de la confection de la courroie flexible, leur taux pondéral est limité à trente parties, au maximum, pour cent parties d'élastomère de base.

Dans une réalisation préférentielle, des courroies flexibles synchrones ont été fabriquées selon l'invention, avec une armature flexible (1) en câblé de verre traité par un système d'adhérisation adapté pour assurer son adhérence aux compositions élastomériques au contact.

De telles courroies ont été testées en endurance sur un banc d'essai de transmission de puissance dont la poulie motrice comporte 19 dents et la poulie réceptrice 37 dents, qui est muni d'un galet de tension de 60 millimètres de diamètre en contact avec le dos de la courroie flexible synchrone, le régime de la poulie motrice étant de 3000 tours par minute et la puissance transmise, constante, étant de 6 Kilowatt. Dans ces conditions d'essai, la température sous enceinte était 95°C pendant 90 % du temps et 115°C pendant 10 %.

Des courroies flexibles synchrones selon l'invention ont été testées en comparaison avec des courroies résistant à la chaleur de l'art antérieur, d'abord dans leur état initial, puis après immersion de 24 heures dans de l'huile de moteur à 100°C (Etat I-100) ou à 120°C (Etat I-120) et, dans un autre essai, avec aspersion d'huile de moteur chaude pendant toute la durée de l'essai (Etat A).

Les résultats obtenus sur les courroies synchrones selon l'invention sont comparés, ci-après, à ceux obtenus sur des courroies de l'art antérieur ; ils sont exprimés en heures de durée de vie au banc d'essai dans les sévères conditions indiquées précédemment. Les deux types de courroies flexibles synchrones - selon l'invention et selon l'art antérieur - présentent, à l'état initial, des durées de vie très voisines, de l'ordre de 650 à 670 heures.

| ETAT DE LA COURROIE | DUREE DE VIE EN HEURES | | Rapport des durées de vie des courroies selon l'invention et de l'art antérieur |
|---|---|---|---|
| | courroie synchrone selon l'invention | courroie synchrone de l'art antérieur | |
| I-100 | 650 | 320 | 2,0 |
| I-120 | 650 | 120 | 5,4 |
| A | >1500 | 420 | >3,5 |

Dans l'état A, où les courroies flexibles synchrones sont aspergées d'huile de moteur chaude pendant toute la durée de l'essai, la courroie flexible synchrone selon l'invention présente une durée de vie plus de trois fois supérieure à celle de la courroie flexible synchrone résistant à la chaleur de l'art antérieur.

Les avantages apportés par le perfectionnement aux courroies flexibles à denture, objet de l'invention sont :

- la protection de la composition élastomérique à matrice de copolymère éthylène - alpha-oléfine alkylé (ACSM) ou non alkylé (CSM) assurant la tenue mécanique aux températures élevées, de toute dégradation par de l'huile de moteur chaude, grâce à l'interposition du coussin protecteur (7) en composition élastomérique à matrice de copolymère butadiène-acrylonitrile hydrogéné (HNBR) ;
- l'amélioration de l'homogénéité aux points les plus sollicités par continuité de composition élastomérique à matrice de copolymère butadiène-acrylonitrile hydrogéné (HNBR), jusqu'au contact avec l'armature flexible (1) ;
- la réduction de l'effet-mèche favorisant le cheminement de l'huile grâce au fait que toutes les discontinuités des matériaux textiles, en particulier les coutures du tissu traité (3) et leurs bords libres, sont noyées au sein de la composition élastomérique à matrice de copolymère butadiène-acrylonitrile hydrogéné (HNBR), protectrice contre les projections d'huile ;
- dans une variante préférentielle, la limitation de la propagation des défauts et, particulièrement, des craquelures provoquant une réduction de la durée de vie de la courroie flexible à denture, par localisation de l'interface entre compositions élastomériques de natures différentes au sein de compositions élastomériques renforcées de fibres courtes.

En conclusion, la durée des courroies flexibles à denture, perfectionnées selon l'invention, est notablement accrue par la structure proposée, y compris dans les conditions sévères de fonctionnement à haute température avec risques de projection d'huile.

L'homme de l'art pourra adapter la structure composite et la formulation des compositions élastomériques comme l'épaisseur relative des couches à différents types de courroies, synchrones, striées, dentées ou crantées, sans sortir du cadre de l'invention.

**Revendications**

1. Courroie flexible à denture et, plus particulièrement, courroie synchrone, dans laquelle le dos de la

9

courroie (5) et la denture portée par l'une au moins des faces de ladite courroie flexible sont formés d'un substrat (2) à matrice de copolymère éthylène-alpha-oléfine chlorosulfoné alkylé (ACSM) ou non alkylé (CSM) et sont associés à une composition élastomérique à matrice de copolymère butadiène - acrylonitrile hydrogéné (HNBR) qui recouvre la surface de la denture, protégée par un tissu traité (3), imprégné d'une composition élastomérique à matrice de copolymère butadièneacrylonitrile hydrogéné (HNBR), caractérisée en ce que l'interface de liaison entre, d'une part, la composition élastomérique à matrice de copolymère butadiène-acrylonitrile hydrogéné (HNBR), constituant le matériau d'imprégnation dudit tissu traité (3), et, d'autre part, la composition élastomérique à matrice de copolymère éthylène-alpha-oléfine chlorosulfoné alkylé (ACSM) ou non alkylé (CSM), formant le substrat (2) du dos de la courroie (5) et de la denture, est décalé vers l'intérieur de la denture, zone moins sollicitée en fonctionnement de ladite courroie flexible à denture, grâce à l'interposition d'un élément modérateur intermédiaire (7) et/ou (9), afin que la tenue mécanique aux températures élevées de ladite courroie flexible à denture ne soit pas altérée du fait des projections d'huile chaude venues du moteur, en ce que ledit élément modérateur intermédiaire (7) et/ou (9) est réalisé dans une composition élastomérique à matrice de copolymère butadiène-acrylonitrile hydrogéné (HNBR), de nature identique ou différente de la composition élastomérique d'imprégnation dudit tissu traité (3) et en ce que le cablé constitutif de l'armature flexible (1) de ladite courroie est noyé, dans la zone située entre deux dents consécutives de la denture, au sein de la composition élastomérique à matrice de copolymère butadiène-acrylonitrile hydrogéné (HNBR), constituant de l'élément modérateur intermédiaire (7), (9).

2. Courroie flexible à denture et, plus particulièrement, courroie synchrone, selon la revendication 1, caractérisée en ce que l'élément modérateur intermédiaire (7) et/ou (9) présente une épaisseur comprise entre 0,1 et 0,6 fois la hauteur des dentures mesurée entre le tissu traité (3) et l'armature flexible (1).

3. Courroie flexible à denture et, plus particulièrement, courroie synchrone, selon l'une des revendications 1 ou 2, caractérisée en ce que l'élément modérateur intermédiaire est un coussin protecteur (9) réalisé en composition élastomérique à matrice de copolymère butadiène-acrylonitrile hydrogéné (HNBR), homogène, c'est à dire dépourvue de renforcement par fibres courtes.

4. Courroie flexible à denture et, plus particulièrement, courroie synchrone, selon l'une des revendications 1 ou 2, caractérisée en ce que l'élément modérateur intermédiaire est un bouclier anisotropiquement renforcé (9) réalisé en composition élastomérique à matrice de copolymère butadièneacrylonitrile hydrogéné (HNBR) renforcé de fibres courtes orientées préférentiellement dans des plans parallèles à ceux des cablés de l'armature flexible (1).

5. Courroie flexible à denture et, plus particulièrement, courroie synchrone, selon l'une des revendications 1 ou 2, caractérisée en ce que sa structure comporte, depuis le tissu traité (3) jusqu'au dos de la courroie (5), le coussin protecteur (7), réalisé en composition élastomérique à matrice de copolymère butadiène-acrylonitrile hydrogéné (HNBR), homogène, le bouclier anisotropiquement renforcé (9) réalisé en composition élastomérique à matrice de copolymère butadiène-acrylonitrile hydrogéné (HNBR) renforcée de fibres courtes et le substrat (2) en composition élastomérique à matrice de copolymère éthylène-alpha-oléfine chlorosulfoné alkylé (ACSM) ou non alkylé (CSM), homogène.

6. Courroie flexible à denture et, plus particulièrement, courroie synchrone, selon l'une des revendications 1 ou 2, caractérisée en ce que sa structure comporte, depuis le tissu traité (3) jusqu'au dos de la courroie (5), le coussin protecteur (7), réalisé en composition élastomérique à matrice de copolymère butadiène-acrylonitrile hydrogéné (HNBR), homogène, une couche de liaison également renforcée (10), réalisée en composition élastomérique à matrice de copolymère éthylène-alpha-oléfine chlorosulfoné alkylé (ACSM) ou non alkylé (CSM) renforcée de fibres courtes et le substrat (2) en composition élastomérique à matrice de copolymère éthylène-alpha-oléfine chlorosulfoné alkylé (ACSM) ou non alkylé (CSM), homogène.

7. Courroie flexible à denture et, plus particulièrement, courroie synchrone, selon l'une des revendications 1 ou 2, caractérisée en ce que sa structure comporte, depuis le tissu traité (3) jusqu'au dos de la courroie (5), le bouclier anisotropiquement renforcé (9), réalisé en composition élastomérique à matrice de copolymère butadiène-acrylonitrile hydrogéné (HNBR) renforcée de fibres courtes, la couche de liaison également renforcée (10), réalisée en composition élastomérique à matrice de copolymère éthylène-alphaoléfine chlorosulfoné alkylé (ACSM) ou non alkylé (CSM) renforcée de fibres courtes et le substrat (2) en composition élastomérique à matrice de copolymère éthylène-alpha-oléfine chlorosulfoné alkylé (ACSM) ou non alkylé (CSM), homogène.

8. Courroie flexible à denture et, plus particulièrement, courroie synchrone, selon l'une des revendications 1 ou 2, caractérisée en ce que sa structure comporte, depuis le tissu traité (3) jusqu'au dos de la courroie (5), le coussin protecteur (7), réalisé en composition élastomérique à matrice de copolymère butadiène-acrylonitrile hydrogéné (HNBR), homogène, le bouclier anisotropiquement renforcé (9), réalisé en composition élastomérique à matrice de copolymère butadiène-acrylonitrile hydrogéné (HNBR) renforcé de fibres courtes, la couche de liaison également renforcée (10), réalisée en composition élastomérique copolymère éthylènealpha-oléfine chlorosulfoné alkylé (ACSM) ou non alkylé (CSM) renforcée de fibres courtes et le substrat (2) réalisé en compositon élastomérique à matrice de copolymère éthylènealpha-oléfine chlorosulfoné alkylé (ACSM) ou non alkylé (CSM), homogène.

9. Courroie flexible à denture et, plus particulièrement, courroie synchrone, selon l'une des revendications 4 à 8, caractérisée en ce que l'épaisseur de chacune des couches en compositions élastomériques renforcées de fibres courtes du bouclier anisotropiquement renforcé (9) et de la couche de liaison également renforcée (10), ou la somme de leurs épaisseurs, est comprise entre 0,7 et 1,3 fois l'épaisseur de la nappe de cablés formant l'armature textile (1).

10. Courroie flexible à denture et, plus particulièrement, courroie synchrone, selon l'une des revendications 1, 2 ou 4 à 9, caractérisée en ce que le taux pondéral de fibres courtes dans les compositions élastomériques du bouclier anisotropiquement renforcé (9) et de la couche de liaison également renforcé (10) est au plus égal à 30 parties pour 100 parties d'élastomère.

11. Courroie flexible à denture et, plus particulièrement, courroie synchrone, selon la revendication 10, caractérisée en ce que le renforcement des compositions élastomériques du bouclier anisotropiquement renforcé (9) et de la couche de liaison également renforcée (10) est constitué de fibres textiles naturelles, artificielles ou synthétiques d'une longueur comprise entre 2 dixièmes de millimètre et 20 millimètres.

12. Courroie flexible à denture et, plus particulièrement, courroie synchrone, selon la revendication 11, caractérisée en ce que le renforcement des compositions élastomériques du bouclier anisotropiquement renforcé (9) et de la couche de liaison également renforcée (10) est constitué de fibres courtes de polyamide ou de polyamide aromatique.

13. Courroie flexible à denture et, plus particulièrement, courroie synchrone selon la revendication 11, caractérisée en ce que le renforcement des compositions élastomériques du bouclier anisotropiquement renforcé (9) et de la couche également renforcée (10) est constitué de fibres courtes d'alcool polyvinylique.

FIG.1
Art Antérieur

FIG.2

FIG.3a

FIG.3b

**Office européen des brevets**

# RAPPORT DE RECHERCHE EUROPEENNE

Numero de la demande

EP 92 40 3387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN, vol. 13, no. 257 (M-837)(3605), 14 juin 1989; & JP-A-01 058 831 (BANDO CHEM.) 06-03-1989 (Cat. D)<br>--- | 1,4,7 | F 16 G 1/28 |
| Y | EP-A-0 451 983 (MITSUBOSHI BELTING) * Page 3, ligne 20 - page 4, ligne 10; figures 1,2 *<br>--- | 1,4,7 | |
| Y | WO-A-8 404 951 (DAYCO) * Page 8, ligne 3 - page 11, ligne 19; figures 1,5 *<br>--- | 1,4,7 | |
| A | US-A-4 626 232 (WITT) * Colonne 9, lignes 18-26; figure 2 *<br>--- | 1,4,10, 11,12 | |
| A | EP-A-0 455 417 (MITSUBOSHI BELTING) * Page 4, lignes 20-25 *<br>--- | 10,11, 12,13 | |
| A | EP-A-0 018 456 (MITSUBOSHI BELTING) * Page 11, lignes 11-22; figures 7,8 *<br>--- | 10,11, 12,13 | **DOMAINES TECHNIQUES RECHERCHES (Int. Cl.5)** |
| A | PATENT ABSTRACTS OF JAPAN, vol. 14, no. 33 (M-923), 22 janvier 1990; & JP-A-01 269 743 (BANDO CHEM.) 27-10-1989 (Cat. D)<br>--- | | F 16 G<br>B 29 D |
| A,D | FR-A-2 334 021 (PIRELLI)<br>---               -/- | | |

Le présent rapport a été établi pour toutes les revendications

| Lieu de la recherche | Date d'achèvement de la recherche | Examinateur |
|---|---|---|
| LA HAYE | 10-03-1993 | BARON C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP 92 40 3387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 628 678 (TOSOH)<br>--- | | |
| A | EP-A-0 452 488 (NIPPON ZEON)<br>& WO-A-89 12 076 (Cat. D)<br>----- | | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 10-03-1993 | BARON C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)